# EUROPÄISCHE PATENTSCHRIFT

(11) **EP 0 697 029 B1**
(45) Veröffentlichungstag und Bekanntmachung des Hinweises auf die Patenterteilung: **26.08.1998**
(21) Anmeldenummer: 94916211.9
(22) Anmeldetag: 06.05.1994
(51) Int. Cl.: C09D 175/04, C09D 131/02, C08F 283/00, D06N 3/14, D06M 15/564

(54) **WÄSSRIGE POLYMERDISPERSIONEN UND IHRE VERWENDUNG ZUR HERSTELLUNG WASSERDAMPFDURCHLÄSSIGER BESCHICHTUNGEN**
AQUEOUS POLYMER DISPERSIONS AND THEIR USE IN THE PRODUCTION OF COATINGS WHICH ARE PERMEABLE TO WATER VAPOUR
DISPERSIONS POLYMERES AQUEUSES ET LEUR UTILISATION POUR REALISER DES REVETEMENTS PERMEABLES A LA VAPEUR D'EAU

(30) Priorität: 07.05.1993 DE 4315269
(43) Veröffentlichungstag der Anmeldung: 21.02.1996
(73) Patentinhaber: ROTTA GMBH, 68006 Mannheim (DE)
(72) Erfinder: MÖBUS, Helmut, D-67251 Freinsheim (DE); BISTER, Erhard, D-64846 Gross-Zimmern (DE); MÜLHAUPT, Rolf, D-79104 Freiburg (DE)
(74) Vertreter: Kinzebach, Werner, Dr.
(86) Internationale Anmeldenummer: EP9401461
(87) Internationale Veröffentlichungsnummer: WO9426831

(56) Entgegenhaltungen:
- EP-A- 0 308 115
- EP-A- 0 309 113
- DE-A- 1 953 348
- FR-A- 2 224 514
- GB-A- 2 081 724

## Beschreibung

Die Erfindung betrifft wäßrige Polymerdispersionen und ihre Verwendung zur Herstellung wasserdampfdurchlässiger Beschichtungen.

Polymere wasserdampfdurchlässige Beschichtungssysteme auf Basis hydrophiler Polyurethane für textile Anwendungen sind bekannt. Um Nachteile reiner Polyurethansysteme zu vermeiden, beschreitet man den Weg, diese oder Polyharnstoffsysteme mit Polyacrylaten zu kombinieren. Mit der mechanischen Mischung von Polyurethan- oder Polyharnstoffdispersionen oder ihren Vorstufen mit Polyacrylatdispersionen und Füllstoffen, wie sie in der DE-A-40 22 602 beschrieben ist, werden nur ungenügend wasserdampfdurchlässige textile Beschichtungen erhalten. Diese als Schaum applizierten Coatings erfordern hohe Auflagen von 40 - 50 g/m² und weisen die für poröse Beschichtungen typischen Nachteile auf, siehe Chemtech 21(1991) 11, 670.

Die DE-A-39 02 067 beschreibt (Co)Polyacrylatdispersionen mit Anteilen radikalisch polymerisierbarer Monomere, welche Ureidogruppen 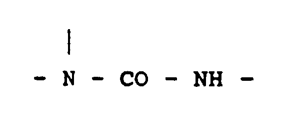 im Molekül enthalten. Diese werden als Formaldehydfänger verwendet. Die erhaltenen Acrylatbeschichtungen weisen jedoch sehr geringe Wasserdampfdurchlässigkeiten auf.

Die DE-A-40 12 339, DE-A-40 27 971 und DE-A-40 27 743 lehren die Anwendung von (Meth)Acryloylgruppen enthaltenden Oligo- oder Polyurethanen als Lack, als Bindemittel für Überzugsmassen oder als wäßriges Bindemittelsystem und/oder Beschichtung. Die Herstellung der Oligo- oder Polyurethankomponente wird in einem organischen Lösemittel durchgeführt und die Acrylatkomponenten werden direkt in das Polyurethan eingebaut. Die Dispergierung bzw. Lösung in Wasser erfolgt aufgrund einer ionischen Modifizierung mit Dimethylolpropionsäure. In allen Fällen wird ein Verhältnis NCO : OH < 1 angestrebt. Die Vernetzung des Polyurethans erfolgt über die Acrylatkomponente.

Die US-A-4 730 021 bzw. die EP-A-167 188 beschreiben monoethylenisch ungesättigte Monoisocyanatverbindungen, welche in einem ersten Schritt hergestellt und in einem zweiten Schritt mit polyisocyanaten, Polyolen, Polyaminen und anderen Verbindungen zu Polyurethanen aufgebaut werden. Diese Polyurethane sind dank des Einbaus ionischer Komponenten selbstemulgierend. Sie wirken als Schutzkolloid und ihre monoethylenisch ungesättigten Funktionalitäten können gemeinsam mit ethylenisch ungesättigten Monomeren einer Pfropfpolymerisation in Emulsion unterworfen werden. Es entstehen vorzugsweise Teilchen mit Polyurethan-Schalen und Polyacrylat-Kern. Die Teilchen weisen Pfropfraten der Acrylatmonomere von ca. 50 % auf. Dieser Prozeß wird vor allem zur Einsparung der teureren Polyurethankomponente in Beschichtungen eingesetzt, in denen es auf hohe Abriebfestigkeiten ankommt. Die geforderte Abriebfestigkeit wird durch die Polyurethan-Schale der Teilchen gewährleistet.

Gemäß der US-A- 5 057 569 werden trockene, feste, lipophile Polymere (z.B. Polyurethane, Polyester oder Epoxipolymere), die mindestens eine Vinylgruppe je Molekül tragen, in ethylenisch ungesättigten Monomeren gelöst, in Wasser dispergiert und einer Pfropfpolymerisation unter Emulsionsbedingungen unterworfen. Man erhält über die Vinylkomponente vernetzte Polyurethane hoher Molmassen, die zur Herstellung wasserbeständiger Filme als Bindemittel, Adhäsivkleber etc. brauchbar sind. Ihre Wasserdampfdurchlässigkeit ist gering.

Die US-A- 4 318 833 beschreibt Beschichtungsmassen mit hoher Beständigkeit gegen Rißbildung und gegen Benzin, Glanzretention und verbesserter Adhäsion. Sie werden hergestellt, indem zunächst ein Polyurethanpräpolymer in einem üblichen Lösungsmittel gebildet und dann mit einem ethylenisch ungesättigten Monomer in Kontakt gebracht wird. Anschließend wird auspolymerisiert.

In dem Bestreben, flächenförmige Materialien, vor allem Textilien wind- und wasserdicht und dabei wasserdampfdurchlässig auszurüsten, werden mikroporöse Beschichtungen für Textilien, die nach dem Koagulationsverfahren hergestellt werden, in Betracht gezogen. Nach dem Rakelauftrag einer Lösung eines Polymers in einem organischen Lösemittel wird die Koagulation dieser Lösung auf dem beschichteten Textil durch ein Nichtlösemittel hervorgerufen und anschließend nachgewaschen und getrocknet, siehe z.B. Journal of Coated Fabrics 20, 1990, 11 - 23. Unabhängig vom verwendeten Nichtlöser (der in der Regel Wasser ist) ist diese Art von Beschichtungen stets mit dem Einsatz wenigstens eines organischen Lösemittels verbunden. Dabei entweichen mehr oder weniger stark Dämpfe von Lösemitteln sowohl auf der Abdunststrecke zwischen Rakel und Koagulationsbad als auch bei der abschließenden Trocknung. Ein weiterer Nachteil dieser Art von Beschichtung ist es, daß große Mengen des Löse-/Koagulationsmittel-Gemischs anfallen, die destillativ aufgearbeitet oder verbrannt werden müssen. Zudem stellt der Prozeß hohe technologische Ansprüche an die Abstimmung von Bahngeschwindigkeit und Auftragsgewichten mit der gleichbleibenden Zusammensetzung des Koagulationsbades.

Bekannt sind auch Möglichkeiten, wasserdampfdurchlässige Beschichtungen herzustellen, wobei man eine wasserlösliche Komponente, z.B. ein Salz [H.J. Buschmann und E. Schollmeyer, Text. Praxis Int., 1992, Dez., 1156-1158] oder eine enzymatisch abbaubare Substanz [DE-PS 3543217] in ein Polymergerüst einbaut, diese eingeschlossene Substanz anschließend auswäscht und das Material anschließend trocknet. Der Auswaschprozeß unterliegt einer komplizierten Kinetik und wird unter anderem von der Schichtdicke stark beeinflußt. Weiterhin fallen Badflüssigkeiten an, die mit erheblichem energetisch-technischem Aufwand aufgearbeitet werden müssen.

Aus diesen Gründen gab es vielfältig Versuche, wasserdampfdurchlässige Beschichtungen durch den Auftrag von wäßrigen Polymerdispersionen ohne Anwendung von Koagulationsbädern, z.B. Dispersionen hydrophiler Polyurethane auf Textilien herzustellen. Alle bekannten Systeme sind jedoch aufgrund ihrer durch ionische oder nichtionische Gruppen oder Blockcopolymerstrukturen bewirkten, selbstemulgierenden Eigenschaften nicht permanent. Solche waschpermanenten Beschichtungen sind nur durch den Einsatz wasserlöslicher organischer Lösemittel, z.B. von Aceton, N-Methylpyrrolidon, Dimethylformamid oder Dimethylacetamid, in den wäßrigen Dispersionen möglich.

In der DE-PS 3633874 ist ein Verfahren zur Herstellung wasserdampfdurchlässiger Ausrüstungen für textile Flächengebilde beschrieben, nach welchem die Beschichtung durch In-line-naß-innaß-Auftrag von zwei wäßrigen Polyurethandispersionen erfolgt, von denen die eine durch kationische, die andere durch anionische Gruppen selbstemulgierend ist. Der in der Grenzfläche entstehende Symplex ist praktisch unlöslich und sollte gegenüber Haushaltswäschen und chemischer Reinigung beständig sein. Dieses Verfahren ist in seiner Anwendung jedoch begrenzt, weil die Symplex-Bildung nicht in die Tiefe des ersten Strichs erfolgt, da der erste Strich bei üblicherweise guter Benetzung des Basismaterials tiefer in dieses eindringen kann als der zweite Strich. Damit ist auch der Mengenauftrag des zweiten Strichs begrenzt, wenn die Waschpermanenz erhalten bleiben soll. Da nur die "zugänglichen" gegenpoligen ionogenen Gruppen des ersten Strichs neutralisiert werden, können bei zu hohen Auftragsgewichten Teile des zweiten Strichs nicht im Symplex gebunden werden. Zudem muß beim Anwender eine Beschichtungsapparatur mit wenigstens zwei Rakeln vorhanden sein; eine Zwischentrocknung und Aufwickeln nach dem ersten Strich oder das Aufbringen weiterer Striche zur Verbesserung der Effektleistung vor allem bei gröberen und bei weniger dichten Geweben ist nicht möglich.

In der EP-A-0 309 113 sind wäßrige Dispersionen beschrieben, die ein Vinylpolymer und ein Polyurethan, das zumindest teilweise von dem aromatischen Diisocyanat 2,4'-Diphenylmethandiisocyanat abgeleitet ist, enthalten. Mit diesen Dispersionen sind Überzüge zu erhalten, welche härter sind als solche, die aus Produkten auf Basis von Toluoldiisocyanat(TDI) erhalten wurden, und überlegene Beständigkeit gegenüber Wasser und organischen Lösungsmitteln besitzen.

Die FR-A-2 224 514 beschreibt eine Polyurethanlatexzubereitung, welche Filme und Überzüge mit verbesserter mechanischer Festigkeit ergibt.

Die GB-A-2 081 724 schließlich beschreibt ein Farbvertiefungsmittel, das eine wäßrige Harzzusammensetzung enthält, die durch Polymerisation eines ungesättigten Monomers in Gegenwart einer wärmehärtbaren Polyurethan-Emulsion erhalten wird.

Der vorliegenden Erfindung liegt die Aufgabe zugrunde, waschpermanente, wasserdampfdurchlässige Beschichtungssysteme für die Textilindustrie zur Verfügung zu stellen.

Weiter liegt der Erfindung die Aufgabe zugrunde, eine gegenüber Waschen und chemischer Reinigung beständige, wasserdampfdurchlässige Beschichtung für Textilien und andere flächenförmige Materialien zu entwickeln, die ihre wasserabweisenden, wasserdampfdurchlässigen Eigenschaften sowohl nach mehreren chemischen Reinigungszyklen als auch nach mehreren Haushaltswäschen behält und frei von organischen Lösemitteln bei der Herstellung ist. Sie sollte auf der Basis eines wäßrigen Systems auf herkömmlichen Beschichtungsmaschinen herstellbar sein.

Überraschenderweise wurden nun wäßrige Dispersionen auf Basis von Polymerkomponenten aus Polyurethanpräpolymeren und α,β-ethylenisch ungesättigten Monomeren gefunden, deren Teilchen in Form eines interpenetrierenden oder semi-interpenetrierenden Netzwerkes vorliegen und die wasserdampfdurchlässige und wasserabweisende Beschichtungen ergeben, die aus interpenetrierenden Netzwerken aufgebaut sind.

Die Erfindung betrifft daher wäßrige Polymerdispersion, die Teilchen aus einem interpenetrierenden oder semi-interpenetrierenden Netzwerk von Polymerkomponenten A und B enthält, wobei die Polymerkomponente A ein vernetztes oder verzweigtes Polyurethan ist, das von einem aliphatischen Polyisocyanat abgeleitete Einheiten und Polyoxyethyleneinheiten und gegebenenfalls Polyoxypropylen-, Polyester-, Polycarbonat, Polycaprolacton-, Polysiloxan-, Polybutadien- und/oder Polyamideinheiten und gegebenenfalls Harnstoffbindungen aufweist, wobei der Massenanteil der Polyoxyethyleneinheiten an der gesamten Masse des vernetzten Polyurethans 40 bis 90% beträgt, und die Komponente B ein lineares, verzweigtes oder vernetztes Polymer aus mindestens einem Vinyl-C₁-C₁₈-Carbonsäureester oder einem Gemisch davon mit mindestens einem (Meth)acrylsäure-C₁-C₁₈-Alkylester und/oder mindestens einer weiteren vinylogen Verbindung ist, das wenigstens 0,05%, bezogen auf das Gewicht von B, an Einheiten umfaßt, die von mindestens einer vernetzenden Komponente C abgeleitet sind, welche ausgewählt ist unter Glyzidylacrylat, Glyzidylmethacrylat, Vinyltrialkoxysilanen, Acrylsilanen und/oder Derivaten des Acrylamids oder Methacrylamids, und bezogen auf das Gewicht von B, wenigstens 0,03 % an Einheiten umfaßt, die von mindestens einer hydrophilierenden Komponente D abgeleitet sind, welche ausgewählt ist unter Methacrylsäure, Fumarsäure, Vinylphosphonsäure, Vinylsulfonsäure, N-(Dimethylphosphonomethyl)(meth)acrylamid, N-(Diethylphosphonomethyl)(meth)acrylamid, Hydroxyethylacrylat, Hydroxyethylmethacrylat, Hydroxypropylacrylat und Hydroxypropylmethacrylat.

Die Polymerkomponente A ist erhältlich durch Umsetzung wenigstens eines Polyisocyanates mit wenigstens einer aliphatischen oder teilweise aliphatischen Polyolkomponente, die eine Gesamthydroxyfunktionalität n > 2 und eine Hydroxylzahl von 11 bis 280 aufweist und ein Homo- oder Copolymer eines Alkylenoxids mit einem zahlenmittleren Molekulargewicht von 400 - 10.000 umfaßt, zu einem Isocyanatpräpolymer und Kettenverlängerung und/oder Vernetzung des erhaltenen Präpolymers.

Die vorliegende Erfindung betrifft weiterhin die Verwendung der wäßrigen Dispersionen zur Herstellung wasserdampfdurchlässiger und wasserundurchlässiger Beschichtungen, insbesondere für Textilmaterialien sowie die beschichteten Materialien. Die erfindungsgemäßen Dispersionen können auch außerhalb des Textilsektors für die Beschichtung und Imprägnierung von flächenförmigen Materialien, wie Papieren und Vliesen, als Kleb- und Dichtmaterial, als Bindemittel für Farbstoffe und Pigmente sowie als Rohstoff für Schäume oder verpreßte Schäume benutzt werden.

Die erfindungsgemäßen Dispersionen lassen sich mit üblichen Verdickern zu Pasten verarbeiten. Mit diesen Pasten ist die Erzeugung von Beschichtungen möglich, in denen die Polymerkomponente A mit der Polymerkomponente B ein interpenetrierendes Netzwerk ausbildet. Diese Beschichtungen stellen überraschenderweise wasserundurchlässige, aber wasserdampfdurchlässige Schichten auf einem Substrat, vorzugsweise auf Textilien, dar, welche aufgrund ihres Netzwerkcharakters waschpermanent sind. Die Polymerkomponenten besitzen eine relativ geringe Netzwerkdichte und niedrige Glasübergangstemperaturen. Sie quellen nur geringfügig und sind daher auch gegenüber Naßabrieb während der Wäsche der Textilien und während des Tragens der Kleidungsstücke beständig.

Das interpenetrierende oder semi-interpenetrierende Netzwerk entsteht infolge des Aufbaus der Polymerkomponente B aus monomeren Substanzen in Gegenwart der Polymerkomponente A. Prinzipiell kann unterschieden werden zwischen interpenetrierenden Netzwerken aus den Polymerkomponenten A und B, in denen A und B vernetzt sind, wobei die Vernetzung der beiden Polymerkomponenten in hintereinandergeschalteten Reaktionsschritten erfolgen kann, und semi-interpenetrierenden Netzwerken, in denen A vernetzt und B unvernetzt ist und umgekehrt. Bei der nachträglichen Vernetzung von A bzw. B, z.B. durch Wärmebehandlung des beschichteten Substrates, entsteht wiederum ein interpenetrierendes Netzwerk.

Die Polymerkomponente A ist erfindungsgemäß ein vernetztes Polyurethan mit Polyoxyalkyleneinheiten. Für die Herstellung der Polymerkomponente A verwendet man Polyole auf der Basis von Polyalkylenoxiden oder Gemische von Polyolen auf der Basis von Polyalkylenoxiden mit Polyolen, welche Polyester-, Polycarbonat-, Polycaprolakton-, Polysiloxan-, Polybutadien-, Polyisopren-, Polyamid-, Polyurethan- oder Polyharnstoffpolyole darstellen. Diese können gegebenenfalls niedermolekulare Polyole enthalten. Das Polyol oder das Polyolgemisch wird derart gewählt, daß im Durchschnitt je Molekül wenigstens 2 Hydroxylgruppen vorhanden sind, d.h. eine Gesamthydroxyfunktionalität von n > 2 vorhanden ist. Als Polyalkylenoxide kommen die in Methoden der organischen Chemie (Houben-Weyl), 4. Auflage, Band E 20/2, Stuttgart, 1987, Seiten 1367-1379; Ullmann's Encyclopedia of Industrial Chemistry, Fifth Completely Revised Edition, Band A21, Seiten 579-589 und Ullmann's Encyclopädie der technischen Chemie, 4. neubearbeitete und erweitere Auflage, Band 19, Seite 31 ff., S. 297 ff. beschriebenen Verbindungen in Frage.

Besonders geeignet für die Herstellung der Polymerkomponente A sind Homopolymere von Ethylenoxid und Copolymere von Ethylenoxid mit Propylenoxid, Butylenoxid und anderen Alkylenoxiden sowie Blockpolymere mit zahlenmittleren Molgewichten von 400 - 10 000. Diese Polyalkylenoxidkomponenten haben einen Gewichtsanteil von mindestens 10, vorzugsweise mindestens 25 und insbesondere mindestens 40 % an der Gesamtmasse der Polymerkomponente A. Besonders bevorzugt sind Polyethylenoxidhomopolymere mit einem zahlenmittleren Molgewicht von 400 - 10 000, vorzugsweise 400 - 4 000, insbesondere 600 - 2 000.

Den Polyalkylenoxidpolymeren können niedermolekulare Polyole, wie Ethylenglykol, 1,2-Propandiol, 1,3-Propandiol, 1,4-Butandiol, 1,6-Hexandiol, Diethylenglykol, Triethylenglykol, Tetraethylenglykol, Monoester von Trimethylolpropan und Glyzerin, z.B. Trimethylolpropanmonocaprylat, Diester von Pentaerythrit, z.B. Pentaerythritdistearat, zugemischt werden.

Den Polyalkylenoxidpolymeren können auch amino- oder mercaptoterminierte Verbindungen zugesetzt werden, die zweifach reaktiv gegenüber Isocyanaten sind, beispielsweise Polyetherdiamine, Hexamethylendiamin, Isophorondiamin, 1,6-Hexandithiol, p-Hydroxythiophenol, 2-Aminoethanthiol und 2-Aminoethanol.

Die linearen Polyole können mit Polyolen mit mehr als 2 Hydroxylgruppen je Molekül vermischt werden, z.B. solche niedermolekularen Verbindungen wie Trimethylolpropan, Pentaerythrit, Glyzerin, Sorbitol, dimerisiertes Trimethylolpropan oder dimerisiertes Pentaerythrit.

Anstelle dieser Polyole werden auch andere gegenüber Isocyanaten mehr als zweifach reaktive niedermolekulare Verbindungen allein oder im Gemisch verwendet wie Mono-, Di- und Trialkanolamine, z.B. Ethanolamin, Diethanolamin, Isopropanolamin, Diisopropanolamin und Triethanolamin.

Als Polyol mit mehr als zwei Hydroxylgruppen je Molekül dienen auch Ethylenoxidhomo- und -copolymere, Propylenoxidhomo- und -copolymere und andere Alkylenoxidhomo- und -copolymere, welche sich durch die folgenden Formeln I-V beschreiben lassen.

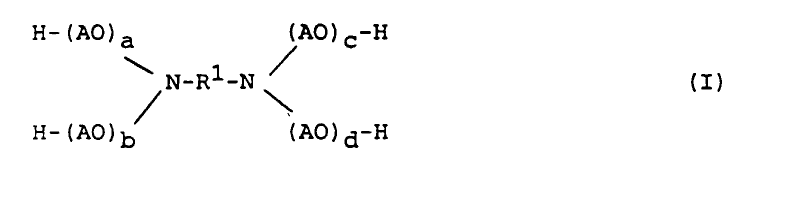

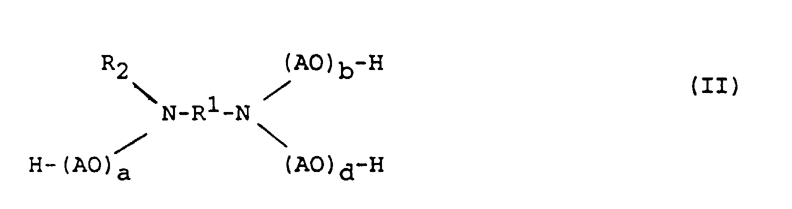

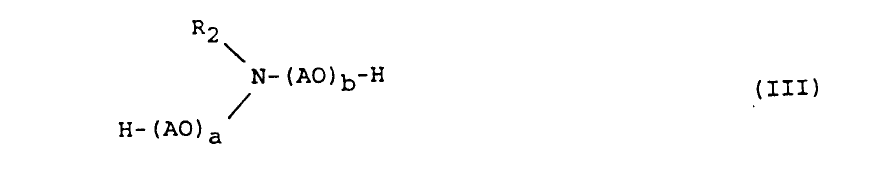

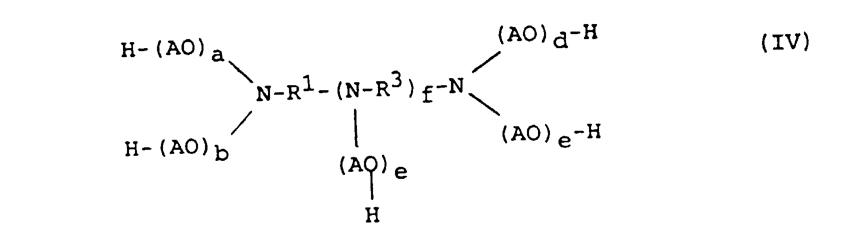

R⁴(-O-(AO)ₐ -H)ₙ (V)

worin
- R¹, R³ =: C₂ - C₁₂-Alkylen, gleich oder verschieden voneinander;
- R² =: C₁ - C₁₈-Alkyl;
- AO =: Alkylenoxidreste mit 2 - 4 Kohlenstoffatomen;
- a =: ganze Zahlen > 0 ;
- b, c, d, e =: ganze Zahlen ≥ 0 ;
- a + b + c + d + e =: 1 - 500
- R⁴ =: ein gegebenenfalls substituierter, aliphatischer, cykloaliphatischer oder aromatischer Kohlenwasserstoffrest mit p = 3-18 C-Atomen;
- n =: 3 - 6, wobei n ≤ p.

Beispiele für solche Verbindungen aus der Vielfalt der synthetischen Produkte sind N-Methyldiethanolamin, die auf Ethylendiamin gestarteten Propylenoxid-Ethylenoxid- und Ethylenoxid-Propylenoxid-Blockpolymere (Tetronics bzw. Tetronics R der BASF) und Ethylenoxid-Propylenoxidmischpolymerisate (Genapol PN der Hoechst AG), die auf aliphatischen Polyalkoholen gestarteten Propylenoxid-Ethylenoxid- und Ethylenoxid-Propylenoxid-Blockpolymerisate (Pluronic bzw. Pluronic R der BASF, Dowfax der Dow Chemical) und die Ethylenoxid-Propylenoxid-Mischpolymerisate (Glissolube CE der BASF, Polyglykol P41 der Hoechst AG), die auf Trimethylolpropan oder Glyzerin gestarteten Ethylenoxid- bzw. Propylenoxidhomopolymere (Imbentine der Kolb AG, Voranole der Dow Chemical, Desmophen-Typen der Bayer AG), die Ethylenoxidanlagerungsprodukte an N-(C₁₂ - C₁₈-Alkyl)-1,3-Propandiamin (Ethoduomeene der Akzo Chemical).

Anstelle der Polyole mit mehr als 2 Hydroxylgruppen je Molekül können auch Ethylenoxid-, Propylenoxid- und andere Alkylenoxidhomo- und -copolymere mit endständigen Aminogruppen eingesetzt werden wie die Jeffamine T-Typen der Texaco.

In einer Ausführungsvariante der erfindungsgemäßen Dispersionen werden als Polyolkomponenten aliphatische oder teilaliphatische Polyester oder Polycarbonate mit einer Funktionalität n ≥ 2 eingesetzt, welche statistische oder Blockcopolymerisate von Ethylenglykol, Propylenglykol, Diethylenglykol, Triethylenglykol, Tetraethylenglykol, Neopentylglykol, Butandiol, Hexandiol, Trimethylolpropan, Adipin- und Sebacinsäure mit einem zahlenmittleren Molgewicht von 1 000 - 6 000 und einer Funktionalität n = 2 - 3 darstellen, wie sie z.B. unter den Markennamen Lupraphen und SyStol der BASF AG bekannt sind, oder die Spaltprodukte der Alkoholyse bzw. Aminolyse von hochmolekularem Polyethylenterephthalat oder Polybutylenterephthalat mit Dialkoholen, z.B. Ethylenglykol und Butandiol, oder mit Aminoalkoholen, z.B. Ethanolamin, anfallen.

Bei einer Variante setzt man zur Herstellung der Polymerkomponente A ein Gemisch ein, welches zu 90 - 99 Gewichtsprozenten aus Polyethylenoxid mit einem zahlenmittleren Molgewicht von 400 - 2 000 und zu 1 - 10 % aus Trimethylolpropan, Glycerin oder Diethanolamin besteht.

Gemäß einer weiteren Variante setzt man zur Herstellung der Polymerkomponente A ein Polyolgemisch ein, welches zu 40 - 60 % aus einem Polyethylenoxid mit einem zahlenmittleren Molgewicht von 400 - 2 000, vorzugsweise 600 - 2 000, und zu 60 - 40 % aus einem aliphatischen Polyesterpolyol auf der Basis von Diethylenglykol, Neopentylglykol, Trimethylolpropan und Adipinsäure mit einer Hydroxylzahl von 45 - 70 und einer Funktionalität n = 2,1 - 2,9 besteht.

Bei einer weiteren Variante setzt man zur Herstellung der Polymerkomponente A ein Gemisch ein, welches zu 10 - 25 Gew.-% aus einem Polysiloxandiol der allgemeinen Formel 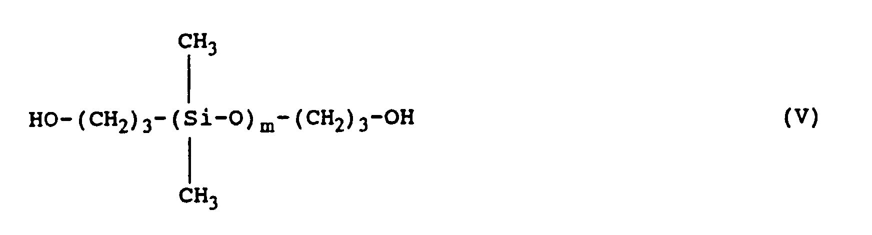 mit m = 10 - 250,
zu 40 - 50 Gew.-% aus Polyethylenoxid mit einem zahlenmittleren Molgewicht von 1 000 - 4 000 und zu 35 - 60 Gew.-% aus einem aliphatischen Polyesterpolyol auf der Basis von Diethylenglykol, Neopentylglykol, Trimethylolpropan und Adipinsäure mit einer durchschnittlichen OH-Zahl von 45 - 70 und einer Funktionalität n = 2,1 - 2,9 besteht.

Gemäß einer weiteren Variante setzt man zur Herstellung der Polymerkomponente A Gemische ein, die 5 - 50 Gew.-% Polysiloxanpolyole der allgemeinen Formeln VI und VII 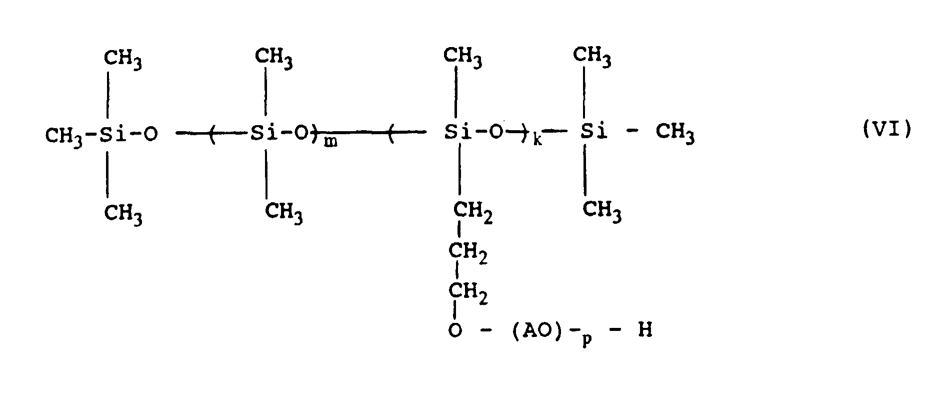 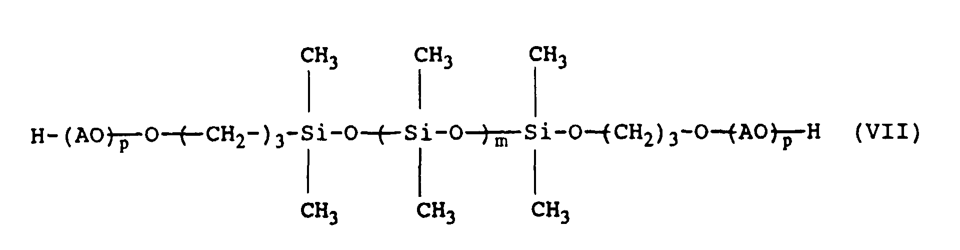 mit
k = 1 - 5, vorzugsweise 2 - 4
m = 10 - 250
p = 2 - 150
AO = Alkylenoxidreste mit 2 - 4 Kohlenstoffatomen,

50 - 99 Gew.-% Polyethylenoxid mit einer zahlenmittleren Molmasse von 1 000 - 4 000 und 0 - 50 Gew.-% eines aliphatischen Polyesterpolyols auf der Basis von Diethylenglykol, Neopentylglykol, Trimethylolpropan und Adipinsäure mit einer durchschnittlichen OH-Zahl von 45-70 und einer Funktionalität von n = 2,1-2,9 oder 0-5 Gew.-% Glycerin oder Trimethylolpropan enthalten.

Bei einer weiteren Variante setzt man zur Herstellung der Polymerkomponente A einen vierwertigen Alkohol der allgemeinen Formel 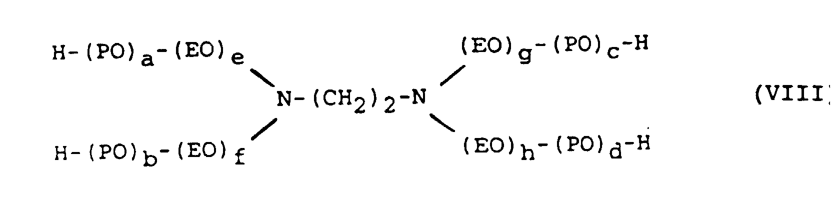 mit
- PO, EO =: Propylenoxid- bzw. Ethylenoxidreste;
- a + b + c + d =: 36;
- e + f + g + h =: 30;
ein.

Die Auswahl der möglichen Polyole, die für die Herstellung der Polymerkomponente A eingesetzt werden, ist groß und praktisch nur dadurch begrenzt, daß die Polymerkomponente A einen Anteil von wenigstens 10 Gew.-% Ethylenoxid-Homo- oder -Copolymeren aufweist. Für die Erzielung einer höheren Wasserdampfdurchlässigkeit ist es von Vorteil, den Alkylenoxid-, insbesondere Ethylenoxidpolymeranteil an der Polymerkomponente A auf wenigstens 25 Gew.-%, vorzugsweise wenigstens 40 Gew.-%, zu steigern.

Im allgemeinen arbeitet man mit Polyolen oder Polyolgemischen, welche eine Hydroxyfunktionalität von n > 2 aufweisen, so daß sie mit praktisch allen Diisocyanaten und Polyisocyanaten mit Diisocyanatanteil umgesetzt werden können. Es ist jedoch auch möglich, daß die verwendeten Polyole oder Polyolgemische ausschließlich Diole darstellen, wenn mit Polyisocynaten mit einer Gesamtfunktionalität von n > 2 umgesetzt wird.

Bei einer weiteren Variante der erfindungsgemäßen Präpolymere zur Herstellung der Polymerkomponente A und der erfindungsgemäßen Dispersionen werden niedermolekulare Polyole eingesetzt, die ionische oder ionogene Gruppen tragen. Beispiele für solche Substanzen sind Dimethylolpropionsäure und N-Methyldiethanolamin. Der Einsatz von N-Methyldiethanolamin ist für waschpermanente Textilausrüstungen bevorzugt.

Schließlich ist es auch möglich, dem Polyolgemisch bestimmte Mengen an monofunktionellen Alkoholen, Aminen oder Mercaptanen hinzuzufügen, mit dem Ziel der Regulierung der Kettenlängen der präpolymere oder mit dem Ziel des Einstellens solcher Eigenschaften wie gute Filmbildung oder Weichheit. Beispiele für solche monofunktionellen Verbindungen sind Monoether von Alkylenoxidpolymeren und Rizinolsäure. Ihre Mengen werden so berechnet, daß sie den NCO-Überschuß verringern, jedoch nicht kompensieren, bzw. sie werden stets durch entsprechende Mengen höher als zweifunktioneller Polyisocyanate oder höher als zweifunktioneller Polyole und/oder Polyamine unter Beachtung des allgemeinen NCO:OH-Verhältnisses von 1,05 - 1,95, vorzugsweise 1,05 - 1,75, ausgeglichen.

Die Definition für die erfindungsgemäß verwendeten Polyole gilt auch für den teilweisen oder vollständigen Ersatz der Polyole durch andere Verbindungen, z.B. durch mercapto- und aminoterminierte Verbindungen.

Als Isocyanatkomponenten zur Herstellung der NCO-terminierten Präpolymere für die Polymerkomponente A werden handelsübliche Polyisocyanate verwendet. Geeignete Polyisocyanate sind insbesondere aliphatische Di- oder Polyisocyanate, wie Tetra- und Hexamethylendiisocyanat, Trimethylhexamethylendiisocyanat, Isophorondiisocyanat, Methylen-bis(cyclohexylenisocyanat), Toluylendiisocyanat, Methylen-bis(phenylenisocyanat), das Reaktionsprodukt aus 1 Molequivalent Trimethylolpropan und 3 Molequivalenten Hexamethylendiisocyanat, das Biuret aus 3 Molequivalenten Hexamethylendiisocyanat und 1 Molequivalent H₂O, die Triisocyanurate des Hexamethylendiisocyanats, des Isophorondiisocyanats und/oder des Toluylendiisocyanats, die Urethdione des Hexamethylendiisocyanats, Isophorondiisocyanats, Trimethylhexamethylendiisocyanats und des Methylen-bis-(cyclohexylenisocyanats), vorzugsweise Hexamethylendiisocanat, Tetramethylhexamethylendiisocyanat, Isophorondiisocyanat und Methylen-bis-(cyclohexylenisocyanat).

Bei verschiedenen Varianten der Herstellung der erfindungsgemäßen Dispersionen wird mit Gemischen aus Polyisocyanaten mit einer durchschnittlichen Funktionalität n > 2 und Polyolen mit einer durchschnittlichen Funktionalität von 2 gearbeitet, z.B. mit Polyethylenoxiden und den Triisocyanuraten des Hexamethylendiisocyanats oder des Isophorondiisocyanats oder den Biureten aus einem Mol Wasser und drei Mol Hexamethylendiisocyanat oder 3 Mol Trimethylhexamethylendiisocyanat.

Anstelle der Polyisocyanate werden bei verschiedenen Herstellungsvarianten der erfindungsgemäßen Dispersionen verkappte Polyisocyanate eingesetzt, die bei Kontakt mit Wasser oder bei erhöhten Temperaturen die Isocyanatfunktionen zurückbilden und als solche mit H-aciden Verbindungen zur Kettenverlängerung fähig sind. Beispiele für solche Substanzen, die sich zur Verkappung von Isocyanaten eignen, sind Malonester, Bisulfite, Laktame und Ketoxime, z.B. Malonsäurediethylester, Mononatrium- und -kaliumsalze der schwefligen Säure, ε-Aminocaprolaktam oder Butanonoxim.

Gemäß einer weiteren Herstellungsvariante der erfindungsgemäßen Dispersionen werden niedermolekulare Diisocyanate mit Polyolen zum Isocyanatpräpolymer ausreagiert und diese anschließend mit ε-Aminocaprolaktam abreagiert, bevor die Emulgierung der nun verkappten Isocyanatpräpolymere in wäßriger Phase erfolgen kann.

Gemäß einer anderen Herstellungsvariante der erfindungsgemäßen Dispersionen werden die in Lösung befindlichen Isocyanatpräpolymere in eine wäßrige Phase gegeben, die ein saures Salz der schwefligen Säure im Überschuß oder Unterschuß enthält, so daß bei der einsetzenden Verkappungsreaktion eine in der Hitze hydrolysierbare Carbamoylverbindung entsteht. Solche Carbamoylverbindungen führen somit zur Vernetzung der Polymerkomponente A bzw. - bei Vorhandensein reaktiver Gruppen auf dem Substrat - auch zur Reaktion mit dem Substrat. Reaktive Substrate sind z.B. Wolle, Polyamid, Baumwolle, Papier, Leder und Seide.

Im allgemeinen arbeitet man jedoch mit Diisocyanaten und einem Polyol oder Polyolgemisch mit einer durchschnittlichen Funktionalität > 2. Auf diese Art und Weise lassen sich die Eigenschaften der Dispersionen und der Beschichtungen, speziell die auf den Textilsektor geforderte Weichheit problemlos einstellen.

Erfindungsgemäß werden zur Herstellung der Präpolymerlösungen so viele NCO-Funktionen zugesetzt, daß ein Verhältnis von NCO zu OH > 1,05 und < 2, vorzugsweise ≤ 1,75 eingestellt wird. Durch dieses Verhältnis wird gewährleistet, daß keine freien niedermolekularen Diisocyanate im Reaktionsgemisch verbleiben und je Präpolymermolekül durchschnittlich mehr als zwei Urethangruppen enthalten sind.

Für den Aufbau von NCO-terminierten Präpolymeren zur Herstellung der Polymerkomponente A, die mehr als 2 Urethan- und/oder Harnstoffbindungen pro Molekül enthalten und verzweigte Oligomere oder Polymere darstellen, sind im allgemeinen Lösemittel erforderlich, um eine Viskositätserniedrigung herbeizuführen bzw. um bei Temperaturen zu arbeiten, die eine Allophanatbildung sicher ausschließen. Die Herstellung der NCO-Präpolymere wird jedoch auch in der Schmelze durchgeführt.

Bei der Herstellung der Präpolymere für die erfindungsgemäßen Dispersionen werden übliche Polyurethanlösemittel, wie Ketone, chlorierte Kohlenwasserstoffe, Ether, Ester und aromatische Kohlenwasserstoffe, verwendet. Die Auswahl der Lösemittel wird nur von ihrer Austauschbarkeit gegen α,β-ethylenisch ungesättigte Verbindungen aufgrund destillativer Trennbarkeit und der Löslichkeit der Präpolymere in ihnen bestimmt. Vorzugsweise verwendet man AOX-freie Lösemittel wie Aceton, Methylethylketon, Diethylketon, Methylpropylketon, Cyclohexanon, Diethylenglykoldimethylether, Tetrahydrofuran, Ethylacetat, Butylacetat, Benzol und Toluol. Besonders bevorzugt ist der Einsatz niedrig siedender Lösemittel, die sich leicht gegen höher siedende α, β-ethylenisch ungesättigte Verbindungen austauschen lassen, z.B. Aceton.

Die Bildung des Präpolymers für die Polymerkomponente A verläuft in der Siedehitze des Lösemittels oder Lösemittelgemischs oder bei Temperaturen unterhalb der Siedetemperatur des Lösemittels oder Lösemittelgemischs. Sie wird durch die üblichen organischen Übergangsmetallverbindungen und tertiäre Amine katalysiert. Beispiele hierfür sind Organozinndicarboxylate, wie Dibutylzinndilaurat, sowie Triethylamin und Triethyldiamin.

Es wird jedoch auch ohne Katalysator gearbeitet, vorzugsweise bei der Herstellung der Präpolymere in der Schmelze. Weiterhin kann auf Lösemittel gänzlich verzichtet werden, wenn die ethylenisch ungesättigten monomeren Verbindungen zumindest im Anfangsstadium der Präpolymersynthese als Löse-/Verdünnungsmittel für die Polyurethanrohstoffe dienen. in bekannter Weise ist jedoch die Verwendung der Monomere als Lösemittel eingeschränkt, wenn die Isocyanatkomponente wenigstens teilweise mit aminoterminierten Komponenten zum Präpolymer aufgebaut wird.

Der Aufbau der Polymerkomponente B erfolgt aus α, β-ethylenisch ungesättigten Verbindungen alleine oder im Gemisch. Erfindungsgemäß brauchbare Verbindungen sind Vinylester von C₁ - C₁₈-Alkancarbonsäuren, (Meth)acrylsäure-C₁ - C₁₈-Alkylester, Vinyl-C₁ - C₆-Alkylether, Mono- und Diester von α, β-ethylenisch ungesättigten Dicarbonsäuren, (Meth)acrylamidderivate, N-Vinylaminderivate, Diamide und Imide von α, β-ethylenisch ungesättigten Dicarbonsäuren sowie Polyalkylenoxid-mono(meth)acrylate und Polyalkylenoxidmonovinylether.

Bevorzugt ist die Komponente B ein Vinylacetatpolymer oder ein Polymer aus einem Gemisch von 50 - 99 Gew.-%,Vinylacetat mit wenigstens einer mono und di-ethylenisch ungesättigten Verbindung.

Gemäß einer Ausführungsform kommen 10 - 85 Gew.-% Vinylester zusammen mit 0,1 -35 Gew.-% Di-C₁-C₆-Alkylester von α, β-ethylenisch ungesättigten Dicarbonsäuren und/oder 0 - 89,9 Gew.-% weiterer Comonomere zur Anwendung. Geeignete Diester sind diejenigen aus der Gruppe der Maleinsäure, Fumarsäure, Itaconsäure und Zitraconsäure, vorzugsweise Dimethylmaleinat, Diethylmaleinat, Dipropylmaleinat, Dibutylmaleinat, Diisobutylmaleinat, Dipentylmaleinat, Diisopentylmaleinat, Dineopentylmaleinat, Dihexylmaleinat, Diethylhexalmaleinat, Dimethylfumarat, Diethylfumarat, Dipropylfumarat, Dibutylfumarat, Diisobutylfumarat, Dipentylfumarat, Diisopentylfumarat, Dineopentylfumarat, Dihexylfumarat, Diethylhexylfumarat, Dimethylitaconat, Diethylitaconat, Dipropylitaconat, Dibutylitaconat, Diisobutylitaconat, Dipentylitaconat, Diisopentylitaconat, Dineopentylitaconat, Dihexylitaconat, Diethylhexylitaconat, Dimethylzitraconat, Diethylzitraconat, Dipropylzitraconat, Dibutylzitraconat, Diisobutylzitraconat, Dipentylzitraconat, Diisopentylzitraconat, Dineopentylzitraconat, Dihexylzitraconat und Diethylhexylzitraconat.

Gemäß einer bevorzugten Variante verwendet man Vinylacetat im Gemisch mit Vinylversataten und Dimethylmaleinat, Dimethylfumarat, Diethylmaleinat oder Diethylfumarat. In einer weiteren bevorzugten Variante verwendet man statt Vinylacetat Vinylpropionat.

Als weitere Comonomere verwendet man vorzugsweise 4,9 - 55 % Acrylnitril, Derivate des Acrylamids und/oder des Methacrylamids, N-substituierte Vinylamide und vinylaromatische Verbindungen. Beispiele für diese weiteren Comonomere sind Methylacrylat, Ethylacrylat, Butylacrylat, Ethylhexylacrylat, Dodecylacrylat, Oleylacrylat, Stearylacrylat, Methylmethacrylat, N-(Methoxymethyl)acrylamid, N-(Ethoxymethyl)acrylamid, N-(Butoxymethyl)acrylamid, N-(Methoxymethyl)methacrylamid, N-(Ethoxymethyl)methacrylamid, N-(Butoxymethyl)methacrylamid, Methylvinylether, Ethylvinylether, Propylvinylether, Isobutylvinylether, Octadecylvinylether, Ethylenglykolbutylvinylether, Triethylenglykolmethylvinylether, 2-Ethylhexylvinylether, Cyclohexylvinylether, Tertiärbutylvinylether, Tertiäramylvinylether, N-Vinylpyrrolidon, N-Vinylformamid, Styrol, und α-Methylstyrol.

Zur Herstellung der Polymerkomponente B verwendet man mindestens eine vernetzende Komponente C, die in Wasser und/oder im Lösemittel oder Lösemittelgemisch und/oder in den α, β-ethylenisch ungesättigten Verbindungen löslich ist. Die Komponente C ist eine wenigstens einfach α, β- ethylenisch ungesättigte Verbindung, die wenigstens eine weitere funktionelle Gruppe trägt, die mit ihresgleichen, mit funktionellen Gruppen des Substrats oder mit funktionellen Gruppen der Polymerkomponente A reagieren kann. Es werden wenigstens 0,05 %, vorzugsweise wenigstens 0,1 % der Komponente C, bezogen auf das Gewicht von B, zugesetzt. Die Komponente C wird ausgewählt unter Glyzidyl(meth)acrylat, Vinyltrialkoxisilanen, Acrylsilanen, Derivaten des (Meth)acrylamids, Hydroxialkyl(meth)acrylaten, Hydroxialkylvinylethern, Polyoxialkylen(meth)acrylaten, Polyoxialkylenvinylethern und/oder weiteren Verbindungen, vorzugsweise Vinyltrimethoxisilan, Trimethoxisilylpropylmethacrylat, N-Hydroximethylacrylamid, N-Hydroximethylmethacrylamid, N-Methoximethylmethacrylamid, N-Butoximethylmethacrylamid, N-Butoximethylacrylamid, Hydroxiethylacrylat, Hydroxiethylmethacrylat, Hydroxipropylacrylat, Hydroxipropylmethacrylat, Polyethylenoxid, Mono(meth)acrylate, Polypropylenoidmono(meth)acrylate, Polyethylenoxidmonovinylether, Polypropylenoxidmonovinylether, Pentaerithrittriacrylat, Triallylpentaerithrit, Trimethylolpropandiacrylat, Diallyltrimethylolpropan und Pentaerithritdi(meth)acrylat oder α, β- ethylenisch ungesättigte Verbindungen mit Isocyanatfunktionen, z.B. Methacryloylisocyanat, oder (Meth)acrylolychlorid.

Als Komponente C werden auch mehrfach ethylenisch ungesättigte Verbindungen, wie Butadien und substituierte Butadiene, Allylacrylat, Di-, Tri- und Tetracrylate und Divinylbenzol, eingesetzt.

Für die Verwendung als wasserdampfdurchlässige, wasserabweisende Beschichtung für Textilmaterialien ist der Grad der Hydrophilie der Polymerkomponente B von Bedeutung. Um die Hydrophilie der Polymerkomponente B in gewünschter Weise einzustellen, baut man eine hydrophilierende Komponente D ein, die von hydrophilierenden Comonomeren abgeleitet ist. Dabei kann es sich um bereits oben erwähnte Comonomere handeln, wobei (Meth)Acrylsäure, Fumarsäure, die Alkalimetallsalze der Vinylsulfonsäure und der Vinylphosphonsäure, welche hydrophilierende Komponenten mit anionischem Charakter sind, bevorzugt sind. Der Einsatz von Acrylsäure und Fumarsäure bewirkt eine leichtere Emulgierbarkeit der Polyurethanpräpolymere in der wäßrigen Phase sowie eine verminderte Gilbneigung dieser Präpolymere.

Nicht-ionische bzw. nicht-ionogene hydrophilierende Comonomere sind substituierte Phosphonomethyl(meth)acrylamide, z.B. N-(Dimethylphosphonmethyl)acrylamid und -methacrylamid. Der Zusatz der substituierten Phosphonomethylsäureester ist auch von Vorteil für die Verbesserung der Vergilbungsbeständigkeit der resultierenden Beschichtung.

Geeignete hydrophilierende Comonomere sind auch Hydroxyalkylderivate von ethylenisch ungesättigten Verbindungen, die auch zur Vernetzung des Polymerisats als Komponente C dienen können, wie Hydroxyethyl(meth)acrylsäureester oder N-Hydroxymethyl(meth)acrylamid.

Das hydrophilierende Comonomer kommt im allgemeinen in einer Menge von 0,1 - 15 Gew.-%, vorzugsweise 1 - 8 Gew.-%, bezogen auf das Gesamtgewicht der Polymerkomponente B zur Anwendung.

Die Herstellung des Präpolymers für die Polymerkomponente A erfolgt in dem Fachmann bekannter Weise, beispielsweise nach dem in der US-A 4,318,833 beschriebenen Verfahren. Die Isocyanatkomponente wird dabei mit der Polyolkomponente in einem geeigneten Lösemittel bis zu einer Endviskosität von 0,5 - 50 Pas, vorzugsweise 0,5 - 20 Pas und insbesondere 1 - 10 Pas mit NCO-Gehalten von 0,1 - 3 %, vorzugsweise 0,5 - 1,5 % (bestimmt nach DIN 53185) innerhalb von 1 - 10 Stunden bei Temperaturen von 40 - 90 °C umgesetzt.

Das erhaltene Präpolymer für die Polymerkomponente A wird dann zur Kettenverlängerung und/oder Vernetzung in eine wäßrige Phase unter Scherung und in Anwesenheit von Emulgatoren eingetragen.

Die Kettenverlängerung und/oder Vernetzung der Polymerkomponente A erfolgt in Gegenwart von Wasser und weiteren - gegebenenfalls durch Wasser aktivierbaren - und gegenüber Isocyanaten mindestens 2-fach reaktiven Verbindungen, insbesondere Ammoniak, Hydrazin und N,N'-Hydrazinderivate, Diamine, oligomerisiertes Ethylenimin, Monoethanolamin, Diethanolamin, Bis- und Trisoxazoline, Ketimine, Di- und/oder Polyhydroxiverbindungen. Anschließend wird das Lösemittel gewünschtenfalls entfernt.

Die Zugabe der ethylenisch ungesättigten Verbindungen für die Polymerkomponente B sowie der Komponenten C und D kann vor oder nach der Kettenverlängerung und/oder Vernetzung der Polymerkomponente A erfolgen.

Nach einer bevorzugten Variante wird nach dem Erreichen einer konstanten NCO-Zahl in der Lösung der Polymerkomponente A das Lösemittel durch die ethylenisch ungesättigten Verbindungen ersetzt, indem das Lösemittel über eine Rektifikationskolonne abgetrennt wird.

Die Kettenverlängerung und/oder Vernetzung der Polymerkomponente A in der wäßrigen Phase erfolgt üblicherweise unter Verzicht auf Zusätze von Kettenverlängerungsmitteln, welche im Anwendungsfall vergilbende Systeme ergeben können.

Die Kettenverlängerung und/oder Vernetzung der Polymerkomponente A kann gleichfalls in Gegenwart von wenigstens einer substituierten oder unsubstituierten Mono-, Di- oder Polycarbonsäure, deren Salz und/oder cyclischen Verbindung als Anhydrid, Lactam oder Lacton, insbesondere Ameisensäure, Essigsäure, Propionsäure, Crotonsäure, Acrylsäure, Methacrylsäure, Oxalsäure, Malonsäure, Bernsteinsäure, Maleinsäure, Maleinsäureanhydrid, Fumarsäure, Itaconsäure, Citraconsäure, Adipinsäure, Zitronensäure, 1,1,2,3-Propantetracarbonsäure, 1,2,3,4-Butantetracarbonsäure, Glyzin, ε-Aminocaprolaktam, Glykolsäure, 3- oder 4-Hyroxibuttersäure, Tartronsäure, Äpfelsäure, Weinsäure, α-Hydroxi-γ-butyrolakton, stattfinden.

Die Kettenverlängerung und/oder Vernetzung der Polymerkomponente A wird auch in Gegenwart weiterer Säuren wie Sulfon- und Phosphonsäuren und substituierten Phosphon- und Sulfonsäuren, wie z.B. Taurin, ausgeführt.

Die Kettenverlängerung und/oder Vernetzung der Polymerkomponente A in einer wäßrigen Phase erfolgt im allgemeinen unter Verwendung von Emulgatoren. Nichtionische Tenside haben sich als Emulgatoren für die Dispergierung der Präpolymere in der wäßrigen Phase als am besten geeignet erwiesen. Geeignete Emulgatoren sind gesättigte und ungesättigte Fettalkoholethoxylate mit 8 - 15 C-Atomen im Fettalkylrest, Alkylphenolethoxylate mit 6 - 13 C-Atomen im Alkylrest und 4 - 100 Ethylenoxideinheiten, vorzugsweise Laurylalkoholethoxilate, Isotridekanolethoxilate und/oder weitere Fettalkoholethoxilate oder Isofettalkoholethoxilate sowie Nonylphenolethoxilate und/oder weitere Alkylphenolethoxilate mit 3 - 50 Ethylenoxideinheiten.

Gut geeignet sind auch Gemische solcher Emulgatoren aus hydrophilen und hydrophoben Komponenten im Verhältnis 1:7 bis 7:1, z.B. aus einem Teil Laurylalkohol (4 EO) und drei Teilen Laurylalkohol (40 EO). Die Emulgatoren werden in einer Gesamtmenge von 0 - 15 Masseprozent der Voremulsion, vorzugsweise 0,8 - 10 Masseprozent der Voremulsion eingesetzt.

Gut geeignet als Emulgatoren sind auch Ester und ethoxilierte Ester des Sorbitans. Vorzugsweise Tween 20 (Polyoxiethylen-Sorbitan-Monolaurat) und Span 60 (Sorbitan-Monostearat) im Verhältnis 1 : 1 bis 1 : 7. Besonders vorzugsweise werden 3 bis 15 % des hydrophoben Emulgators durch Oleylsarcosid ersetzt.

Die so hergestellten Emulsionen enthalten die α, β-ethylenisch ungesättigten Verbindungen B, C und D. Sie stellen also Voremulsionen für den nachfolgenden Schritt der radikalischen Polymerisation dar und besitzen eine mittlere Teilchengröße von 100 - 400 nm. Die Voremulsionen sind bei Raumtemperatur lagerstabil. Die Konzentration der nichtwäßrigen Komponenten beträgt 20 - 55 Gew.-%, vorzugsweise 30 - 45 Gew.-%.

Unmittelbar im Anschluß an das Emulgieren der Präpolymerlösung oder zu einem späteren Zeitpunkt erfolgt die Polymerisation der α, β-ethylenisch ungesättigten Verbindungen in der Voremulsion.

Die Emulsionspolymerisation verläuft nach an sich bekannten Prinzipien der radikalischen oder Redox-Polymerisation im Temperaturbereich von 40 - 80 °C, vorzugsweise als Redox-Polymerisation bei Temperaturen von 40 - 65 °C. Als Starter werden übliche anorganische Peroxide, z.B. Natrium-, Kalium- oder Ammoniumperoxodisulfat oder anorganische und organische Peroxide, z.B. tert.-Butylperpivalat, eingesetzt. Redox-Polymerisationen werden mit anorganischen Peroxiden und bekannten Katalysatoren z.B. Rongalit C (HOCH₂SO₂Na) durchgeführt. Auch der Einsatz von Wasserstoffperoxid ist möglich.

Die erfindungs gemäßen Dispersionen enthalten einen Gewichtsanteil der Komponenten B + C + D, bezogen auf die Gesamtmenge an A, B, C und D im Bereich vom 20-80 Gew.-% liegt.

Die erfindungsgemäßen Dispersionen zeichnen sich durch mittlere Teilchengrößen von 80 - 1000 nm, vorzugsweise 100 - 450 nm aus. Der Feststoffgehalt der Emulsionen beträgt 10-60%, vorzugsweise 20 - 50 %, vorzugsweise 23 - 40 %, besonders bevorzugt 27 - 37 %. Die Dispersionen können auch übliche Zusätze enthalten, z.B. Entschäumer, Emulgatoren, Füllstoffe, Mattierungsmittel, Stabilisatoren, optische Aufheller und Verdickungsmittel.

Die erfindungsgemäßen Dispersionen bilden an der Luft transparente Filme. Zum Auftragen auf Textilmaterialien werden daraus mit handelsüblichen Verdickern Pasten mit Viskositäten von ≥ 10 Pas für den ersten Strich und ≥ 2 Pas für den zweiten und folgende Striche hergestellt. Als geeignete Verdicker erwiesen sich sowohl modifizierte Cellulosen als auch auf Polyacrylat, Polyurethan und Polyethylenoxid basierende Verdicker.

Die so hergestellten Pasten werden in üblicher Weise, z.B. mittels Luft- oder Walzenrakel, auf Textilmaterialien und andere Substrate, insbesondere Vliese, Papier, Leder, Kunstleder, poröse Folien oder Filme aus natürlichen oder synthetischen polymeren Stoffen, aufgetragen. Vorzugsweise werden mehrere Schichten aufgetragen. Dabei können eine oder mehrere der Schichten geschäumt oder geschäumt und anschließend verpreßt werden. Die Auflagen betragen je nach Anzahl der aufgebrachten Beschichtungslagen 10 - 100 g Feststoff/m², vorzugsweise 11 - 60 g Feststoff je m². Es ist zweckmäßig, den Wasseranteil der Beschichtungen bei Temperaturen von 80 - 120 °C zu entfernen, bevor durch Kondensation bei 100 - 200 °C, vorzugsweise 130 - 190 °C, insbesondere bei 150 - 185 °C, die Ausbildung des interpenetrierenden Netzwerkes in der Beschichtung abgeschlossen wird.

Die erfindungsgemäßen Dispersionen dienen zur Herstellung wasserdampfdurchlässiger, wasserabweisender Beschichtungen, die aus einer oder mehreren Schichten bestehen, vorzugsweise 2, 3 oder 4 Schichten, insbesondere für Textilmaterialien.

Die erfindungsgemäßen Beschichtungen stellen dichte Membranen dar, die beständig gegenüber Maschinenwäschen bei 40 °C mit üblichen Haushaltswaschmitteln sind, bei Auflagen von mehr als 12 g/m² Wassersäulen von 500 bis > 1500 mm (Schopper-Wert) standhalten und Wasserdampfdurchlässigkeiten nach DIN 54101 von ≥ 7,5, vorzugsweise 12 - 29 g/m²/mbar/h haben. Der Wasserdampfdurchgangswiderstand ist < 200 x 10⁻³m² x mbar x W.

Wasserdampfdurchlässigkeit, der Schopper-Wert und die Auflage ändern sich auch durch mehrfache chemische Reinigung und/oder 40°-Haushaltswäschen nicht oder nur geringfügig.

Die erfindungsgemäßen Beschichtungen können eine oder mehrere Schichten umfassen. Gemäß einer Variante wird als erste Schicht ein Hydrophobiermittel, vorzugsweise ein Fluorcarbonharz, aufgetragen oder es wird ein mit dem Hydrophobiermittel vorimprägniertes Substrat verwendet. Gemäß einer weiteren Variante wird das Hydrophobiermittel als letzte Schicht aufgetragen oder es wird das beschichtete Substrat einer nachträglichen Imprägnierung mit dem Hydrophobiermittel unterworfen.

Gemäß einer weiteren Variante wird für die erste oder die ersten Schichten eine Dispersion verwendet, die einen weichen, gegebenenfalls klebrigen Polymerfilm ergibt. Für die darauffolgende Schicht(en) wird dann eine Dispersion verwendet, die einen harten, nicht klebrigen, abriebfesten Polymerfilm ergibt. Die Härte bzw. Klebrigkeit der Schicht läßt sich durch den Anteil an Vinylacetat- und/oder Alkylenoxideinheiten steuern. Je größer der Anteil dieser Komponenten ist, umso härter ist die resultierende Beschichtung.

Die nachfolgenden Beispiele illustrieren die Zusammensetzung, Herstellung und Verwendung der erfindungsgemäßen wäßrigen Dispersionen ohne die Erfindung zu begrenzen.

### Beispiel 1:

A) Herstellung einer Präpolymerlösung
   In einen trockenen, stickstoffgespülten 250 ml Vierhalskolben mit Blattrührer, Thermometer, Rückflußkühler und Trockenrohr werden bei Raumtemperatur 9,6 g Hexamethylendiisocyanat mit 25 g wasserfreiem Polyethylenglykol 1000 und 25 g eines wasserfreien aliphatischen Polyesters aus Adipinsäure, Diethylenglykol und einem aliphatischen Triol mit einer OH-Zahl von 60 und einer durchschnittlichen Funktionalität von 2,5 gegeben. Nach der Zugabe von 0,15 g Dibutylzinndilaurat wird innig gemischt und 100 g Aceton werden als Lösemittel zugegeben. Nach Erwärmung auf 65 °C wird 5 Stunden gerührt. Anschließend werden 86,3 g Vinylacetat, 2 g Diethylfumarat und 25 g Butylacrylat zugegeben und über eine 1,5-m-Vigreux-Kolonne wird Aceton langsam abdestilliert bis zu einem Restgehalt von < 50 ppm (gaschromatogrpahisch). Die zähe, blasige und trübe Lösung wird auf 40 °C gekühlt, es werden 3 g Nonylphenolethoxilat (6 EO) zugefügt und weitere 10 min gerührt.
B) Herstellen der Voremulsion
   In einem Becherglas werden 380 g Wasser, 0,5 g Ammoniumperoxodisulfat, 4,6 g 50%-ige wäßrige Lösung N-Methylolacrylamid, 4 g Essigsäure und 8,8 g Nonylphenolethoxylat (30 EO) verrührt und anschließend im Eisbad auf 5 °C gekühlt. Darin wird die Präpolymerlösung eingetragen und unter Zuhilfenahme eines handelsüblichen Schnellmischers emulgiert. Die mittlere Teilchengröße beträgt 290 nm, die Viskosität der Voremulsion ist 160 cPs.
C) Polymerisation
   36 g der Voremulsion, vermischt mit 110 g Wasser werden in einem 1-1-Polymerisationsgefäß mit Rückflußkühler, Stickstoffspülung, Impellerrührer und 2 Tropftrichtern vorgelegt und auf 50 °C erwärmt. Aus dem ersten Tropftrichter werden langsam innerhalb von 4 Stunden 0,5 g Rongalit C gelöst in 25 g Wasser, zugetropft. Nach dem Beginn der exothermen Reaktion läßt man innerhalb einer Stunde die restliche Voremulsion aus dem zweiten Tropftrichter zulaufen. Durch anfängliches Kühlen und späteres Heizen wird die Temperatur konstant bei 50 ± 1 °C gehalten. Feststoffgehalt der Dispersion: 28,1 %, die mittlere Teilchengröße beträgt 175 nm, die Viskosität der fertigen Dispersion beträgt 96,5 cPs.
D) Herstellung einer Paste, Textilbeschichtung
   In je 100 g der unter C) hergestellten Dispersion werden 6 g bzw. 2,5 g eines handelsüblichen Verdickers (ROTTA-COATING 1227) auf Basis Polyethylenoxid mittels Dispergierscheibe eingerührt. Die Viskosität der Pasten beträgt ca. 20 bzw. 2 Pa.s.

Ein Polyamidstoff mit einem Warengewicht von 65 g/m² wird mit einem handelsüblichen Fluorcarbonharz (DIPOLIT 457 der Firma ROTTA GmbH) bei einem Flottengehalt von 25 g/l und einer Naßaufnahme von 70 % vorimprägniert und bei 120 °C/90 sec einer Trocknung unterzogen.

Auf den gespannten Stoff werden mit scharfem Luftrakel je ein Strich der beiden Pasten mit Zwischentrocknung bei 100 °C nach jedem Strich aufgebracht und bei 160 °C/3 min auskondensiert.

Die glatte, weiche Beschichtung weist eine Wassersäule von 980 mm vor und 500 mm nach fünf 40 °C-Maschinenwäschen mit einem handelsüblichen Waschmittel auf. Die Wasserdampfdurchlässigkeit nach DIN 54101 beträgt 16,0 und 12,3 g/m²/mbar/h bei einer Auflage von 14,5 g/m².

### Beispiel 2:

Analog Beispiel 1 wird nach der Präpolymerherstellung das Aceton nach der Zugabe von 72 g Vinylacetat, 20 g Butylacrylat und 0,5 g Acrylsäure abdestilliert. Die Starter/Katalysatormengen werden auf 0,4 g Ammoniumperoxodisulfat und 0,2 g Rongalit C reduziert.

Die vergleichsweise steife Beschichtung weist eine Wassersäule > 1000 nm vor der Wäsche bei einer Wasserdampfdurchlässigkeit von 17 g/m²/mbar/h und eine Wassersäule von 700 mm bei einer Wasserdampfdurchlässigkeit von 12,5 g/m²/mbar/h nach fünf Maschinenwäschen bei 40 °C auf.

### Beispiel 3:

Analog Beispiel 1 wird nach der Präpolymerherstellung das Aceton nach der Zugabe von 72 g Vinylacetat, 20 g Butylacrylat, 2 g Diethylfumarat und 0,5 g Acrylsäure abdestilliert. Die Starter/Katalysatormengen werden auf 0,4 g Ammoniumperoxodisulfat und 0,2 g Rongalit C reduziert.

Die Beschichtung weist eine Wassersäule > 1000 nm vor der Wäsche bei einer Wasserdampfdurchlässigkeit von 19 g/m²/mbar/h und eine Wassersäule von 700 mm bei einer Wasserdampfdurchlässigkeit von 15,5 g/m²/mbar/h nach fünf Maschinenwäschen bei 40 °C auf.

### Beispiel 4:

Analog Beispiel 1 werden je 68,6 g des Polyesterpolyols und des polyetherpolyols sowie zusätzlich 17,8 g eines Polydimethylsiloxans mit einer Molmasse von 3000 und zwei endständigen Propylalkoholfunktionen, 40 g Hexamethylendiisocyanat, 272 g Vinylacetat, 76,8 g Butylacrylat, 0,4 g Dibutylzinndilaurat, 3,4 g bzw. 14,8 g der Emulgatoren, 1270 g Wasser, 11,8 g Essigsäure, 15,3 g N-Methylolacrylamid, 1,2 g Ammoniumperoxodisulfat und 0,6 g Rongalit C, welches in 80 ml Wasser gelöst war, eingesetzt.

Feststoffgehalt der Dispersion: 30,8 %, mittlere Teilchengröße 171 nm, Viskosität der fertigen Dispersion: 39 cPs, Wassersäule und Wasserdampfdurchlässigkeit vor der Wäsche ≥ 1000 mm bzw. 17,0 g/m²/mbar/h Wassersäule und Wasserdampfdurchlässigkeit nach fünf Maschinenwäschen 605 mm bzw. 12,4 g/m²/mbar/h.

## Patentansprüche

1. Wäßrige Polymerdispersion, die Teilchen aus einem interpenetrierenden oder semi-interpenetrierenden Netzwerk von Polymerkomponenten A und B enthält, wobei
die Polymerkomponente A ein vernetztes oder verzweigtes Polyurethan ist, das von einem aliphatischen Polyisocyanat abgeleitete Einheiten und Polyoxyethyleneinheiten und gegebenenfalls Polyoxypropylen-, Polyester-, Polycarbonat, Polycaprolacton-, Polysiloxan-, Polybutadien- und/oder Polyamideinheiten und gegebenenfalls Harnstoffbindungen aufweist, wobei der Massenanteil der Polyoxyethyleneinheiten an der gesamten Masse des vernetzten Polyurethans 40 bis 90% beträgt, und
die Komponente B ein lineares, verzweigtes oder vernetztes Polymer aus mindestens einem Vinyl-C₁-C₁₈-Carbonsäureester oder einem Gemisch davon mit mindestens einem (Meth)acrylsäure-C₁-C₁₈-Alkylester und/oder mindestens einer weiteren vinylogen Verbindung ist, das wenigstens 0,05%, bezogen auf das Gewicht von B, an Einheiten umfaßt, die von mindestens einer vernetzenden Komponente C abgeleitet sind, welche ausgewählt ist unter Glyzidylacrylat, Glyzidylmethacrylat, Vinyltrialkoxysilanen, Acrylsilanen und/oder Derivaten des Acrylamids oder Methacrylamids, und bezogen auf das Gewicht von B, wenigstens 0,03 % an Einheiten umfaßt, die von mindestens einer hydrophilierenden Komponente D abgeleitet sind, welche ausgewählt ist unter Methacrylsäure, Fumarsäure, Vinylphosphonsäure, Vinylsulfonsäure, N-(Dimethylphosphonomethyl)(meth)acrylamid, N-(Diethylphosphonomethyl)(meth)acrylamid, Hydroxyethylacrylat, Hydroxyethylmethacrylat, Hydroxypropylacrylat und Hydroxypropylmethacrylat.

2. Dispersion nach Anspruch 1, wobei die Komponente A erhältlich ist durch Umsetzung wenigstens eines Polyisocyanates mit wenigstens einer Polyolkomponente, die eine Gesamthydroxyfunktionalität n > 2 und eine Hydroxylzahl von 11 bis 280 aufweist und ein Homopolymer von Ethylenoxid oder ein Copolymer von Ethylenoxid mit Propylenoxid mit einem zahlenmittleren Molekulargewicht von 400 - 10.000 umfaßt, zu einem Isocyanatpräpolymer und Kettenverlängerung und/oder Vernetzung des erhaltenen Präpolymers.

3. Dispersion nach Anspruch 1 oder 2, dadurch gekennzeichnet, daß es sich bei dem Polyisocyanat um Hexamethylendiisocyanat, Trimethylhexamethylendiisocyanat, Methylen-bis(cyclohexylenisocyanat) und/oder Isophorondiisocyanat handelt.

4. Dispersion nach einem der vorhergehenden Ansprüche, dadurch gekennzeichnet, daß es sich bei dem Polyisocyanat um ein gegenüber Wasser oder acidem Wasserstoff reaktives Isocyanatderivat handelt, insbesondere ein Addukt von Malonestern, Bisulfiten, Lactamen und Ketoximen.

5. Dispersion nach einem der Ansprüche 2 bis 4, dadurch gekennzeichnet, daß das Polyurethanpräpolymer von einem anfänglichen NCO/OH-Verhältnis im Bereich 1,05 - 1,95, vorzugsweise 1,05 - 1,75, ausgehend aufgebaut ist.

6. Dispersion nach einem der Ansprüche 2 bis 5, dadurch gekennzeichnet, daß die Kettenverlängerung und/oder Vernetzung des Polyurethans in Gegenwart von Wasser und weiteren - gegebenenfalls durch Wasser aktivierbaren - und gegenüber Isocyanaten mindestens zweifach reaktiven Verbindungen, insbesondere Ammoniak, Hydrazin und N,N'-Hydrazinderivate, Diamine, oligomerisiertes Ethylenimin, Mono- und Diethanolamin, Bis- und Trisoxazoline, Ketimine und Di- und Polyhydroxyverbindungen, erfolgt.

7. Dispersion nach einem der Ansprüche 2 bis 6, dadurch gekennzeichnet, daß die Kettenverlängerung und/oder Vernetzung in Gegenwart von wenigstens einer substituierten oder unsubstituierten Mono-, Di- oder Polycarbonsäure, deren Salz und/oder cyclischen Verbindung als Lactam oder Lacton, insbesondere Ameisensäure, Essigsäure, Propionsäure, Crotonsäure, Acrylsäure, Methacrylsäure, Oxalsäure, Malonsäure, Bernsteinsäure, Maleinsäure, Maleinsäureanhydrid, Fumarsäure, Itaconsäure, Citraconsäure, Adipinsäure, Citronensäure, 1,1,2,3-Propantetracarbonsäure, 1,2,3,4-Butantetracarbonsäure, Glyzin, ε-Aminocapronsäure, ε-Aminocaprolactam, Glykolsäure, 3-oder 4-Hydroxybuttersäure, Tartronsäure, Äpfelsäure, Weinsäure, α-Hydroxy-γ-butyrolacton, α-Hydroxymethyl-γ-butyrolacton, stattfindet.

8. Dispersion nach einem der vorhergehenden Ansprüche, dadurch gekennzeichnet, daß die Polymerkomponente B aus Vinylacetateinheiten oder Einheiten aus einer Mischung von Vinylacetat mit Ethylhexylacrylat oder einer Mischung von Vinylacetat mit Butylacrylat und gegebenenfalls weiteren mono- und diethylenisch ungesättigten Verbindungen, die 50 - 99 Gewichtsprozent Vinylacetat enthalten, aufgebaut ist.

9. Dispersion nach einem der vorhergehenden Ansprüche, dadurch gekennzeichnet, daß die vernetzende Komponente C ausgewählt ist unter Vinyltrimethoxysilan, Vinyltriethoxysilan, Trimethoxysilylpropylmethacrylat, N-Methylolacrylamid, N-Methylolmethacrylamid, N-Methoxymethylmethacrylamid, N-Butoxymethylmethacrylamid, N-Butoxymethylacrylamid, besonders bevorzugt N-Methylolacrylamid, N-Methylolmethacrylamid und Vinyltriethoxysilan.

10. Dispersion nach einem der vorhergehenden Ansprüche, dadurch gekennzeichnet, daß der Gewichtsanteil der Komponenten B + C + D, bezogen auf die Gesamtmenge an A, B, C und D im Bereich von 20 - 80 Gew.-% liegt.

11. Dispersion nach einem der vorhergehenden Ansprüche, dadurch gekennzeichnet, daß sie Emulgatoren, Füllstoffe, Mattierungsmittel, Stabilisatoren, optische Aufheller, Verdickungsmittel und/oder Hydrophobiermittel enthält.

12. Dispersion nach einem der vorhergehenden Ansprüche, dadurch gekennzeichnet, daß sie einen Feststoffgehalt von 10 - 60 Gewichtsprozent aufweist.

13. Verwendung der Dispersionen nach einem der vorhergehenden Ansprüche zur Herstellung wasserdampfdurchlässiger, wasserabweisender Beschichtungen, die aus einer oder mehreren Schichten bestehen, vorzugsweise 2, 3 oder 4 Schichten, insbesondere für Textilmaterialien.

14. Beschichtetes, flächenförmiges Textilmaterial, erhältlich durch Auftragen einer Dispersion nach einem der Ansprüche 1 - 13 auf ein flächenförmiges Substrat und Behandlung des beschichteten Substrates bei Temperaturen von 100 - 200°C.

15. Beschichtetes Material nach Anspruch 14, dadurch gekennzeichnet, daß es sich bei dem Substrat um ein Textilmaterial, Vlies, Papier, Leder, Kunstleder, eine poröse Folie oder einen Film aus natürlichen oder synthetischen polymeren Stoffen handelt.

16. Beschichtetes Material nach Anspruch 14 oder 15, dadurch gekennzeichnet, daß es eine oder mehrere aus der Polymerdispersion erhältliche Schichten aufweist.

17. Beschichtetes Material nach Anspruch 14 oder 15, dadurch gekennzeichnet, daß als erste Schicht ein Hydrophobiermittel, vorzugsweise ein Fluorcarbonharz aufgetragen wird oder ein mit einem Hydrophobiermittel vorimprägniertes Material verwendet wird oder daß als letzte Schicht ein Hydrophobiermittel, vorzugsweise ein Fluorcarbonharz aufgetragen wird oder das beschichtete Material einer nachträglichen Imprägnierung mit einem Hydrophobiermittel unterzogen wird.

## Claims

1. Aqueous polymer dispersion comprising particles of an interpenetrating or semi-interpenetrating network of polymer components A and B, wherein
polymer component A is a cross-linked or branched polyurethane which contains units derived from an aliphatic polyisocyanate and polyoxyethylene units and optionally polyoxypropylene, polyester, polycarbonate, polycaprolactone, polysiloxane, polybutadiene and/or polyamide units and optionally urea bonds, the proportion of polyoxyethylene units being 40 to 90 % of the total mass of the cross-linked polyurethane, and
component B is a linear, branched or cross-linked polymer of at least one vinyl-C₁₋₁₈-carboxylate or a mixture thereof with at least one C₁₋₁₈-alkyl (meth)acrylate and/or at least one other vinylic compound which contains at least 0.05 %, based on the weight of B, of units derived from at least one cross-linking component C which is selected from glycidyl acrylate, glycidyl methacrylate, vinyl trialkoxysilanes, acrylosilanes and/or derivatives of acrylamide or methacrylamide, and, based on the weight of B, contains at least 0.03 % of units derived from at least one hydrophilic component D which is selected from methacrylic acid, fumaric acid, vinylphosphonic acid, vinylsulphonic acid, N-(dimethylphosphonomethyl) (meth)acrylamide, N-(diethylphosphonomethyl) (meth)acrylamide, hydroxyethyl acrylate, hydroxyethyl methacrylate, hydroxypropyl acrylate and hydroxypropyl methacrylate.

2. Dispersion according to claim 1, wherein component A may be obtained by reacting at least one polyisocyanate with at least one polyol component which has a total hydroxy functionality of n > 2 and a hydroxy number of 11 to 280 and comprises a homopolymer of ethylene oxide or a copolymer of ethylene oxide with propylene oxide with a number average molecular weight of 400 to 10,000, to obtain an isocyanate prepolymer, and chain lengthening and/or cross linking of the prepolymer obtained.

3. Dispersion according to claim 1 or 2, characterised in that the polyisocyanate is hexamethylene diisocyanate, trimethylhexamethylene diisocyanate, methylene-bis(cyclohexylene isocyanate) and/or isophorone diisocyanate.

4. Dispersion according to one of the preceding claims, characterised in that the polyisocyanate is an isocyanate derivative which is reactive with water or acidic hydrogen, more particularly an adduct of malonic esters, bisulphites, lactams and ketoximes.

5. Dispersion according to one of claims 2 to 4, characterised in that the polyurethane prepolymer is synthesised starting from an initial NCO/OH ratio in the range from 1.05 to 1.95, preferably 1.05 to 1.75.

6. Dispersion according to one of claims 2 to 5, characterised in that the chain lengthening and/or cross-linking of the polyurethane is carried out in the presence of water and other - optionally water-activated - compounds which are at least doubly reactive with respect to isocyanates, particularly ammonia, hydrazine and N,N'-hydrazine derivatives, diamines, oligomerised ethyleneimine, mono- and diethanolamine, bis- and trisoxazolines, ketimines and di- and polyhydroxy compounds.

7. Dispersion according to one of claims 2 to 6, characterised in that the chain lengthening and/or cross-linking of the polyurethane is carried out in the presence of at least one substituted or unsubstituted mono-, di- or polycarboxylic acid, a salt and/or cyclic compound thereof as lactam or lactone, particularly formic acid, acetic acid, propionic acid, crotonic acid, acrylic acid, methacrylic acid, oxalic acid, malonic acid, succinic acid, maleic acid, maleic anhydride, fumaric acid, itaconic acid, citraconic acid, adipic acid, citric acid, 1,1,2,3-propanetetracarboxylic acid, 1,2,3,4-butanetetracarboxylic acid, glycine, ε-aminocaproic acid, ε-aminocaprolactam, glycolic acid, 3- or 4-hydroxybutyric acid, tartronic acid, malic acid, tartaric acid, α-hydroxy-γ-butyrolactone and α-hydroxymethyl-γ-butyrolactone.

8. Dispersion according to one of the preceding claims, characterised in that the polymer component B is synthesised from vinyl acetate units or units of a mixture of vinyl acetate with ethylhexyl acrylate or a mixture of vinyl acetate with butyl acrylate and optionally other mono- and diethylenically unsaturated compounds which contain 50-99 % by weight of vinyl acetate.

9. Dispersion according to one of the preceding claims, characterised in that the cross-linking component C is selected from among vinyl trimethoxysilane, vinyl triethoxysilane, trimethoxysilylpropyl methacrylate, N-methylol acrylamide, N-methylol methacrylamide, N-methoxymethyl methacrylamide, N-butoxymethyl methacrylamide, N-butoxymethylacrylamide, most preferably N-methylolacrylamide, N-methylol methacrylamide and vinyl triethoxysilane.

10. Dispersion according to one of the preceding claims, characterised in that the proportion by weight of components B + C + D, based on the total amount of A, B, C and D, is in the range from 20 to 80 % by weight.

11. Dispersion according to one of the preceding claims, characterised in that it contains emulsifiers, fillers, delustering agents, stabilisers, optical brighteners, thickeners and/or water-repellents.

12. Dispersion according to one of the preceding claims, characterised in that it has a solids content of 10 - 60 % by weight.

13. Use of the dispersions according to one of the preceding claims for the production of steam-permeable, water-repellent coatings consisting of one or more layers, preferably 2, 3 or 4 layers, particularly for textile materials.

14. Coated flat textile material obtainable by applying a dispersion according to one of claims 1 to 13 to a flat substrate and treating the coated substrate at temperatures of 100 - 200°C.

15. Coated material according to claim 14, characterised in that the substrate is a textile material, non-woven material, paper, leather, synthetic leather, a porous film or a film of natural or synthetic polymeric substances.

16. Coated material according to claim 14 or 15, characterised in that it comprises one or more layers obtainable from the polymer dispersion.

17. Coated material according to claim 14 or 15, characterised in that a water-repellent, preferably a fluorocarbon resin, is applied as the first layer or a material pre-impregnated with a water repellent is used or a water-repellent, preferably a fluorocarbon resin, is applied as the last layer, or the coated material is subjected to subsequent impregnation with a water-repellent.

## Revendications

1. Dispersion polymère aqueuse contenant un réseau interpénétrant ou servi-interpénétrant de composants polymères A et B, dans laquelle
le composant polymère A est un polyuréthanne réticulé ou ramifié qui présente des unités dérivées d'un polyisocyanate aliphatique et des unités polyoxyéthylène, ainsi le cas échéant que des unités polyoxypropylène, polyester, polycarbonate, polycaprolactone, polysiloxane, polybutadiène et/ou polyamide et éventuellement des liaisons urée, la proportion d'unités polyoxyéthylène représentant 40 à 90 % de la masse totale du polyuréthanne réticulé, et
le composant B est un polymère linéaire, ramifié ou réticulé d'un carboxylate vinylique en C1-C18 ou d'un mélange de ce dernier avec au moins un (méth)acrylate d'alkyle en C1-C18 et/ou au moins un autre composé vinylogène, qui contient au moins 0,05 %, ramené au poids de B, d'unités provenant d'au moins un composant réticulant C choisi dans le groupe comprenant l'acrylate de glycidyle, le méthacrylate de glycidyle, les trialcoxysilanes vinyliques, les silanes acryliques et/ou des dérivés de l'acrylamide ou du méthacrylamide, et au moins 0,03 %, ramené au poids de B, d'unités provenant d'au moins un composant hydrophilisant D choisi dans le groupe comprenant l'acide méthacrylique, l'acide fumarique, l'acide vinylphosphonique, l'acide vinylsulfonique, le (méth)acrylamide de N-diméthylphosphonométhyle, le (méth)acrylamide de N-diéthylphosphonométhyle, l'acrylate d'hydroxyéthyle, le méthacrylate d'hydroxyéthyle, l'acrylate d'hydroxypropyle et le méthacrylate d'hydroxypropyle.

2. Dispersion selon la revendication 1, dans laquelle le composant A peut être obtenu en faisant réagir au moins un polyisocyanate avec au moins un composant polyol ayant une fonctionnalité hydroxy totale n > 2 et un indice d'hydroxyle compris entre 11 et 280 et contenant un homopolymère de l'oxyde d'éthylène ou un copolymère de l'oxyde d'éthylène avec un poids moléculaire moyen en nombre compris entre 400 et 10000, afin d'obtenir un prépolymère d'isocyanate et allonger la chaîne et/ou réticuler le prépolymère ainsi obtenu.

3. Dispersion selon l'une des revendications 1 ou 2, caractérisée en ce que le polyisocyanate est du diisocyanate d'hexaméthylène, du diisocyanate de triméthylhexaméthylène, de bis(cyclohexylène isocyanate) de méthylène et/ou du diisocyanate d'isophorone.

4. Dispersion selon l'une des revendications précédentes, caractérisée en ce que le polyisocyanate est un dérivé d'isocyanate réactif vis-à-vis de l'eau ou un hydrogène acide, en particulier un dérivé d'esters maloniques, de bisulfites, de lactames et de cétoximes.

5. Dispersion selon l'une des revendications 2 à 4, caractérisée en ce que le prépolymère de polyuréthanne est préparé avec un rapport initial NCO/OH compris entre 1,05 et 1,95, de préférence entre 1,05 et 1,75.

6. Dispersion selon l'une des revendications 2 à 5, caractérisée en ce que l'allongement de chaîne et/ou la réticulation du polyuréthanne se fait en présence d'eau et d'autres composés le cas échéant activables par l'eau au moins deux fois réactifs vis-à-vis des isocyanates, en particulier l'ammoniaque, l'hydrazine et des dérivés de la N,N'-hydrazine, des diamines, l'éthylène imine oligomérisée, la monoéthanolamine, la diéthanolamine, des bis- et tris-oxazolines, des cétimines et des composés di- ou polyhydroxy.

7. Dispersion selon l'une des revendications 2 à 6, caractérisée en ce que l'allongement de chaîne et/ou la réticulation se fait en présence d'au moins un acide mono-, di- ou polycarboxylique substitué ou non, de ses sels et/ou composés cycliques sous forme de lactame ou lactone, notamment l'acide formique, l'acide acétique, l'acide propionique, l'acide crotonique, l'acide acrylique, l'acide méthacrylique, l'acide oxalique, l'acide malonique, l'acide succinique, l'acide maléique, l'anhydride maléique, l'acide fumarique, l'acide itaconique, l'acide citraconique, l'acide adipique, l'acide citrique, l'acide 1,1,2,3-propane tétracarboxylique, l'acide 1,2,3,4-butane tétracarboxylique, la glycine, l'acide ε-aminocapronique, le ε-aminocaprolactame, l'acide glycolique, l'acide 3- ou 4-hydroxybutyrique, l'acide tartronique, l'acide malique, l'acide tartrique, la α-hydroxy-γ-butyrolactone, la α-hydroxyméthyl-γ-butyrolactone.

8. Dispersion selon l'une des revendications précédentes, caractérisée en ce que le composant polymère B est préparé à partir d'unités d'acétate de vinyle ou d'unités provenant d'un mélange d'acétate de vinyle et d'aorylate d'éthylhexyle ou un mélange d'acétate d'éthyle et d'acrylate de butyle et éventuellement d'autres composés mono- et diéthyléniquement insaturés contenant de 50 à 99 % en poids d'acétate de vinyle.

9. Dispersion selon l'une des revendications précédentes, caractérisée en ce que le composant réticulant C est choisi dans le groupe formé par le triméthoxysilane de vinyle, le triéthoxysilane de vinyle, le méthacrylate de triméthoxysilylpropyle, l'acrylamide de N-méthylol, le méthacrylamide de N-méthylol, le méthacrylamide de N-méthoxynéthyle, le méthacrylamide de N-butoxyméthyle, l'acrylamide de N-butoxyméthyle, l'acrylamide de N-méthylol, le méthacrylamide de N-méthylol et le triéthoxysilane de vinyle étant particulièrement préférés.

10. Dispersion selon l'une des revendications précédentes, caractérisée en ce que la proportion en poids des composants B + C + D, ramenée à la quantité totale de A, B, C et D, est comprise entre 20 et 80 % en poids.

11. Dispersion selon l'une des revendications précédentes, caractérisée en ce qu'elle contient des émulsifiants, des charges, des agents de matité, des stabilisants, des azurants optiques, des épaississants et/ou des agents d'hydrophobisation.

12. Dispersion selon l'une des revendications précédentes, caractérisée en ce que sa teneur en matières solides est comprise entre 10 et 60 % en poids.

13. Utilisation des dispersions selon l'une des revendications précédentes afin de réaliser des revêtements perméables à la vapeur d'eau et imperméables à l'eau composés d'une ou plusieurs couches, de préférence 2, 3 ou 4 couches, en particulier pour des matériaux textiles.

14. Matériau textile de forme plane revêtu, susceptible d'être obtenu en déposant une dispersion selon l'une des revendications 1 à 13 sur un substrat de forme plane et en traitant le substrat revêtu à des températures comprises entre 100 et 200 °C.

15. Matériau revêtu selon la revendication 14, caractérisé en ce que ledit substrat est un matériau textile, un non-tissé, du papier, du cuir, du similicuir, une feuille poreuse ou un film en matières polymères naturelles ou de synthèse.

16. Matériau revêtu selon la revendication 14 ou la revendication 15, caractérisé en ce qu'il présente une ou plusieurs couches susceptibles d'être obtenues à l'aide de la dispersion polymère.

17. Matériau revêtu selon la revendication 14 ou la revendication 15, caractérisé en ce que l'on dépose comme première couche un agent d'hydrophobisation, de préférence une résine à base de fluorocarbone, ou bien en ce que l'on utilise un matériau préimprégné avec un agent d'hydrophobisation, ou bien en ce que l'on dépose comme dernière couche un agent d'hydrophobisation, de préférence une résine à base de fluorocarbone, ou bien en ce que le matériau revêtu est soumis une imprégnation ultérieure avec un agent d'hydrophobisation.
